# FASCICULE DE BREVET EUROPEEN

(11) **EP 1 425 253 B1**
(45) Date de publication et mention de la délivrance du brevet: **06.11.2013**
(21) Numéro de dépôt: 02777414.0
(22) Date de dépôt: 10.09.2002
(51) Int. Cl.: C04B 18/22, C04B 28/02, C04B 38/00, E01C 13/06

(54) **MATERIAU A BASE DE GRANULATS DE CAOUTCHOUC, PROCEDE DE FABRICATION ET UTILISATIONS ASSOCIEES**
MATERIAL AUF BASIS VON KAUTSCHUKGRANULATEN, VERFAHREN ZUR HERSTELLUNG UND VERWENDUNG DESSELBEN
MATERIAL BASED ON RUBBER GRANULES, METHOD FOR MAKING SAME AND RELATED USES

(30) Priorité: 11.09.2001 FR 0111753
(43) Date de publication de la demande: 09.06.2004
(73) Titulaire: Rincent BTP Services Matériaux, 91026 Evry Cedex (FR)
(72) Inventeur: RINCENT, Jean-Jacques, F-91230 Montgeron (FR)
(74) Mandataire: Intès, Didier Gérard André
(86) Numéro de dépôt international: PCT/FR2002/003068
(87) Numéro de publication internationale: WO 2003/022775

(56) Documents cités:
- WO-A-93/01142
- WO-A1-95/25076
- BE-A- 1 008 040
- DE-A- 2 243 117
- US-A- 4 035 192
- US-A- 6 084 011
- US-A- 6 103 783

## Description

La présente invention concerne le domaine des matériaux utilisés dans le bâtiment et les travaux publics, et qui présentent des caractéristiques spécifiques innovantes.

Plus précisément, l'invention a pour objet de fournir un matériau aggloméré comprenant notamment des granulats, au moins un liant hydraulique tel que du ciment, les granulats étant à base de caoutchouc.

On connaît actuellement des matériaux de ce type dans lesquels les granulats, proportionnellement peu nombreux, sont liés par des résines onéreuses, ce qui en fait des matériaux chers et peu développés.

Ces matériaux sont utilisés notamment pour réaliser des revêtements pour pistes d'athlétisme, aires de jeux.... Ce sont des revêtements minces, souples, absorbant les chocs mais de mise en oeuvre délicate.

En outre, le prix de tels matériaux tant au niveau de leurs constituants, que de leur fabrication, constitue un frein à leur développement.

Le document D1 divulgue un procédé de fabrication d'une composition pour recouvrir une route consistant à mélanger des granulats de caoutchouc, un liant hydraulique, une solution aqueuse, et de l'eau.

Le document D2 divulgue un procédé de fabrication d'une composition pour recouvrir une route consistant à mélanger des granulats de caoutchouc, de la roche écrasée, du sable et un liant avec préchauffage de la roche et du sable.

La présente invention vise notamment à remédier aux inconvénients précités, en proposant un matériau dont les granulats comprennent du caoutchouc. Ces granulats peuvent avantageusement, mais non exclusivement, être issus du recyclage de pneumatiques.

De façon surprenante, l'invention propose d'utiliser un liant minéral pour agglomérer des granulats à base d'un matériau organique tel que des granulats de caoutchouc en contradiction avec le préjugé technique qui considère cet alliage comme impossible à réaliser.

Cette incompatibilité connue entre un matériau organique et un liant inorganique a pu être surmontée conformément à l'invention grâce au procédé mis en oeuvre pour la fabrication du matériau aggloméré selon l'invention.

L'invention concerne donc un procédé de fabrication d'un matériau aggloméré souple comprenant des granulats à base de caoutchouc enrobés dans un liant hydraulique et délimitant entre eux des cavités.

Selon l'invention ce procédé comporte les étapes suivantes :
- dosage et introduction des granulats dans des moyens de malaxage ;
- dosage et introduction d'une solution aqueuse dans les moyens de malaxage ;
- malaxage des granulats ;
- dosage et introduction d'un liant hydraulique dans les moyens de malaxage ;
- malaxage du mélange jusqu'à obtention d'un mélange homogène ;
- ajout d'un complément d'eau et malaxage jusqu'à l'obtention d'un enrobage uniforme des granulats dans le mélange ;
- moulage et/ou coulée et/ou compression puis séchage du mélange.

De préférence le dosage de liant est tel que le ratio eau/liant est compris entre 0,3 et 0,6.

Préférentiellement, le procédé selon l'invention comprend en outre l'introduction d'au moins un adjuvant dans le mélange homogène, avant l'ajout du complément d'eau, l'adjuvant pouvant comprendre des solutions de silicates de sodium ou de potassium, des ignifugeants, des liants hydrocarbonés, des fibres métalliques et/ou de synthèse, des charges minérales.

Le pourcentage de liants hydrocarbonés ou de charges minérales peut être compris entre 1 et 10 %.

Sans sortir du cadre de l'invention, l'adjuvant peut comprendre des tensioactifs, des plastifiants, des durcisseurs ou des retardateurs de prise du matériau, des entraîneurs d'air.

Une particularité de l'invention consiste donc à réaliser un matériau ayant un squelette de type organique dont les constituants sont liés par combinaison avec un liant de type minéral.

Par ailleurs, la présente invention permet d'utiliser au maximum les propriétés spécifiques de granulats à base de caoutchouc, notamment par la quantité, la taille des granulats entrant dans la composition du matériau finalement obtenu.

Avantageusement, on obtient selon l'invention un matériau dont les propriétés acoustiques sont proches de celles du caoutchouc lui-même à cause du volume prépondérant de caoutchouc présent dans le matériau.

De même, l'absorption des ondes mécaniques et thermiques du matériau conforme à l'invention n'est pas éloignée de l'absorption de ces ondes par le caoutchouc lui-même.

On obtient selon l'invention un matériau aggloméré, poreux et ayant des propriétés mécaniques et physiques spécifiques, liées aux propriétés du caoutchouc lui-même.

En fait, l'absorption d'ondes mécaniques, acoustiques et thermiques est directement liée à la porosité, à la nature physico-chimique et à la densité du matériau en question.

Par ailleurs, le matériau selon l'invention est peu sensible au feu et aux phénomènes de lixiviation des éventuels polluants contenus dans les granulats.

Il présente des capacités d'inertage importantes. Autrement dit, le matériau selon l'invention permet de réduire les relargages de "polluants" contenus intrinsèquement dans les granulats ; ces polluants entrent dans la composition du mélange caoutchouteux qui est fragmenté afin d'obtenir les granulats ; ce sont par exemple du soufre, des huiles minérales, des agents stabilisants.

Un autre aspect intéressant de l'invention est d'ordre économique. En effet, le recyclage des pneumatiques usagés reste actuellement insuffisant.

En effet, les pneumatiques usagés peuvent être utilisés dans des filières énergétiques comme combustibles pour produire des calories.

Les pneumatiques usagés peuvent aussi être réutilisés dans le génie civil où ils peuvent être broyés puis associés avec des résines comme expliqué ci-avant pour réaliser des revêtement minces, souples, absorbant les chocs... mais onéreux.

Les pneumatiques usagés peuvent aussi être utilisés pour former des remblais.

Le taux de recyclage de pneumatiques usagés est donc loin de couvrir l'ensemble des besoins.

La présente invention constitue une solution efficace à ce problème puisqu'elle permet de valoriser au mieux un important volume de granulats de caoutchouc recyclés.

Autrement dit, le matériau selon l'invention offre des débouchés très intéressants aux granulats issus du recyclage des pneumatiques ce qui représente un intérêt majeur de l'invention.

Cependant, sans sortir du cadre de l'invention, le granulat à base de caoutchouc peut être fabriqué directement à partir de caoutchouc naturel pour cette utilisation dans le matériau de l'invention. La présente invention représente alors un débouché économique pour la filière caoutchouc elle-même.

Ainsi, l'invention a pour objet un matériau aggloméré comprenant notamment des granulats et au moins un liant hydraulique. Selon l'invention, les granulats sont à base de caoutchouc et ils sont enrobés par le liant hydraulique en délimitant entre eux des cavités.

Avantageusement, les granulats comportent en volume majoritairement du caoutchouc.

Selon une caractéristique intéressante de l'invention, le volume cumulé des cavités communicantes est supérieur ou égal à 15 % du volume total du matériau, et ledit volume est proche du volume total de cavités comprises dans le matériau.

A titre préféré, la taille des granulats est comprise entre 0,1 mm et 50 mm, préférentiellement inférieure à 25 mm.

Par ailleurs, la densité apparente du matériau selon l'invention est comprise entre 0,5 et 1,5 et de préférence 1,2.

Ces caractéristiques permettent d'obtenir un matériau qui absorbe efficacement les vibrations mécaniques, les ondes acoustiques et l'énergie thermique.

En d'autres termes, la présente invention a pour objet un matériau dont les propriétés sont essentiellement celles du granulat caoutchouteux qui en constitue le squelette.

Concernant le liant hydraulique, le pourcentage pondéral de liant hydraulique est compris entre 12 % et 60 %, préférentiellement entre 23 et 30 % du poids total du matériau.

Une autre caractéristique intéressante de l'invention a trait au pourcentage pondéral de granulats : ainsi, le pourcentage pondéral de granulats en caoutchouc est compris entre 35 % et 80 %, préférentiellement entre 50 et 70 % du poids total du matériau.

Selon un mode de réalisation de l'invention, les granulats comprennent plus de 95 % de caoutchouc.

Conformément à un autre mode de réalisation de l'invention, les granulats comprennent 30 % de métal et/ou 3 % de textile.

En outre, la taille D du plus gros granulat est au plus égale à huit fois la taille d du plus petit granulat.

L'invention concerne en outre l'utilisation du matériau ayant les caractéristiques définies ci-avant, pour réaliser des plaques dont l'épaisseur est préférentiellement supérieure ou égale à dix fois la taille du plus gros granulat qu'elle contient.

A titre illustratif, des pistes d'athlétisme peuvent être réalisées dans un matériau selon l'invention.

Une autre utilisation possible de l'invention concerne la réalisation d'ouvrages pourvus d'armatures.

D'autres caractéristiques, détails, avantages de l'invention apparaîtront mieux à la lecture des la description qui va suivre faite à titre illustratif et nullement limitatif, en référence aux planches annexées sur lesquelles :
- la figure 1 est une vue en coupe agrandie et simplifiée d'un matériau selon l'invention ;
- la figure 2 montre des courbes A, B d'analyse granulométrique.

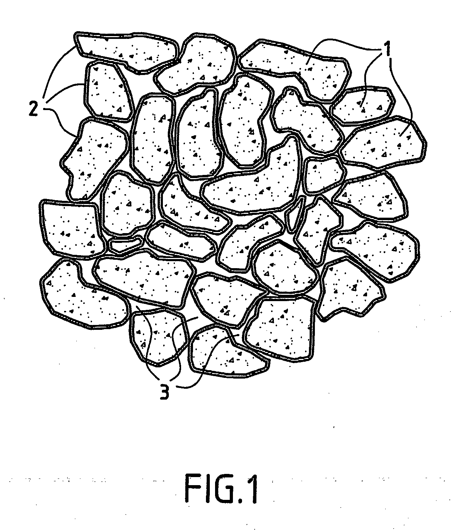

Sur la figure 1 apparaissent les principaux éléments constituant le matériau selon l'invention : on trouve des granulats 1 à base de caoutchouc, enrobés par un liant hydraulique 2 à base d'éléments minéraux tel que du ciment. Des contacts ponctuels, linéaires ou surfaciques entre les enrobages 2 sont avantageusement obtenus, de sorte que des cavités 3 sont formées entre les granulats enrobés 1 au sein de la structure du matériau.

Les granulats 1 sont soit issus de caoutchouc recyclé, soit de caoutchouc naturel.

Dans le cas de caoutchouc recyclé, les granulats peuvent provenir par exemple de pneumatiques usagés qui sont préalablement broyés.

Selon les traitements opérés sur les pneumatiques usagés, on peut obtenir des granulats plus ou moins exempts d'éléments hétérogènes.

Plus précisément, une première technique de recyclage des pneumatiques consiste uniquement à fragmenter, broyer les pneumatiques usagés. Les fragments obtenus après broyage contiennent alors un certain pourcentage d'éléments non caoutchouteux comme du métal et/ou du textile, matériaux entrant dans la composition des pneumatiques.

A titre d'exemple, les granulats obtenus par cette technique comprennent 30 % de métal et/ou 3 % de textile, le reste étant du caoutchouc.

Une autre technique de recyclage des pneumatiques consiste d'abord à trier les différents types de matériaux qui les constituent (essentiellement caoutchouc, textile et métal) puis à traiter séparément chacun de ces matériaux. On obtient par cette méthode un caoutchouc relativement homogène, c'est-à-dire exempt d'éléments non élastomères. On comprend alors aisément que les granulats obtenus à partir de cette séparation sont eux-mêmes exempts de corps étrangers. A titre indicatif, les granulats couramment obtenus par cette technique comprennent plus de 95 % de caoutchouc.

Dans tous les cas, les granulats comporteront en volume majoritairement du caoutchouc. C'est pourquoi on parlera parfois dans la suite de ce texte de "granulats en caoutchouc".

L'objectif final est en effet que le matériau selon l'invention présente des propriétés physiques proches de celles du caoutchouc.

Les granulats en caoutchouc constituent ainsi le squelette du matériau selon l'invention.

Leur taille peut être comprise entre 0,1 mm et 50 mm, préférentiellement inférieure à 25 mm.

Par ailleurs, il est souhaitable que la taille D du plus gros granulat et celle d du plus petit granulat présent dans le matériau soient relativement proches c'est-à-dire que leur rapport est compris dans une plage proche de 1,2 à 3,5.

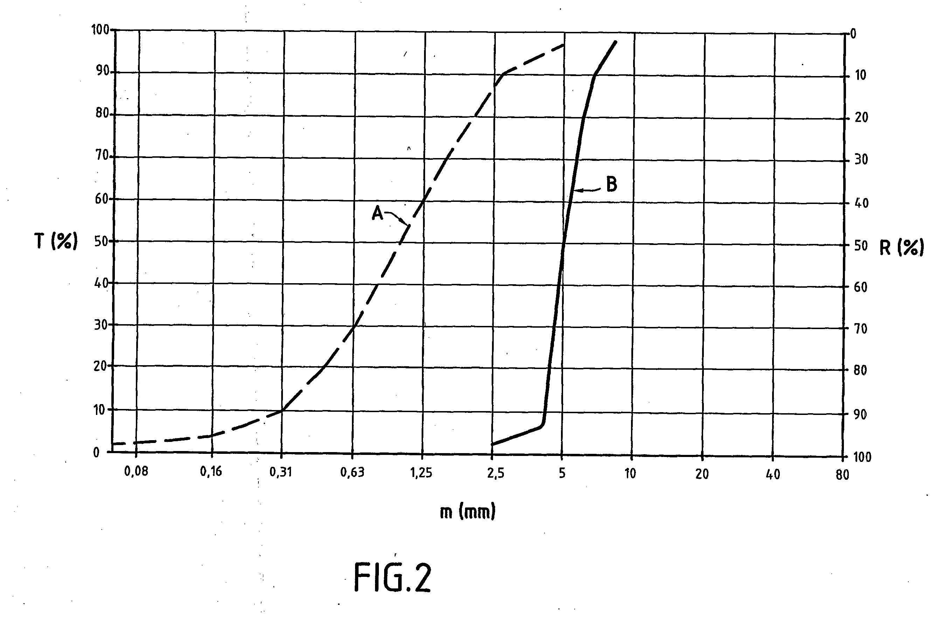

Les tailles d et D sont généralement déterminées par une analyse granulométrique réalisée à l'aide de tamis ayant différentes dimensions de mailles. La figure 2 montre les résultats d'une telle analyse, illustrés par deux courbes A et B obtenues respectivement pour un sable et pour un granulat selon l'invention.

L'analyse consiste à faire passer successivement le produit à analyser à travers des tamis ayant des dimensions de maille décroissantes. Pour chaque tamis, on relève le pourcentage massique de granulats qui ne passe pas : cette valeur est reportée sur un graphe tel que celui de la figure 2 ayant en abscisse la dimension m des mailles du tamis, et en ordonnée le pourcentage massique de granulats ; en ordonnée droite, le pourcentage massique de granulats R dont la taille est supérieure à la dimensions m ; en ordonnée gauche, le pourcentage massique de granulats complémentaires T qui correspond à une taille inférieure à m.

On obtient ainsi des courbes telles que A ou B.

Ainsi, pour la courbe A (correspondant à une analyse granulométrique d'un sable), la taille d est de quelques microns et D est de 5 mm.

Pour la courbe B, correspondant à un exemple de granulats selon l'invention, d est 2,5 mm, tandis que D est 8 mm.

En fonction de l'application envisagée, on choisira des valeurs appropriées pour d et D sachant par ailleurs que la valeur de d et/ou celle de D conditionne les dimensions des cavités 3.

Les paramètres d et D seront choisis afin d'optimiser l'arrangement spatial des granulats au sein du matériau selon l'application envisagée c'est-à-dire afin soit d'augmenter le volume des granulats, soit au contraire d'augmenter le volume des cavités formées dans le matériau.

D'une façon générale, on cherchera à créer un volume important de cavités 3, pour améliorer les capacités d'absorption mécanique et les propriétés acoustiques du matériau.

Plus spécifiquement, le volume cumulé des cavités 3 communicantes est supérieur à 15 % du volume total du matériau.

Des cavités communicantes peuvent être définies comme des cavités reliées par des voies libres.

Cette structure permet une percolation du matériau par un liquide. Cette propriété peut notamment être intéressante pour la réalisation de revêtements routiers qui peuvent ainsi drainer les liquides.

Comme il a été énoncé ci-avant, les granulats en caoutchouc formant le squelette du matériau sont enrobés par un liant hydraulique à base d'éléments minéraux, de type ciment par exemple. Le choix du liant hydraulique dépend de l'utilisation finale recherchée pour le matériau.

A titre illustratif, peuvent être cités : certains liants spéciaux routiers, des laitiers, d'autres déchets industriels à base d'éléments minéraux.

Préférentiellement, le pourcentage pondéral de liant hydraulique est compris entre 12 % et 60 % du poids total du matériau.

En outre, les liants hydrauliques présentent des coûts faibles relativement aux liants organiques.

Par ailleurs, le fait d'enrober les granulats à base de caoutchouc avec un tel liant confère au matériau final une meilleure résistance au feu. Des essais ont été réalisés avec un chalumeau à gaz dont la flamme a été mise au contact du matériau selon l'invention. Il a été constaté, non seulement une combustion localisée à la zone de contact mais encore une extinction de la combustion dans les secondes qui suivent l'arrêt de la flamme. Ces essais mettent donc en évidence l'efficacité de la protection au feu résultant de l'enrobage des granulats de caoutchouc par le liant hydraulique.

L'enrobage des granulats par un liant à base d'éléments minéraux accroît les capacités d'inertage du matériau, c'est-à-dire qu'il permet de réduire le relargage des polluants susceptibles d'être contenus dans les granulats : ainsi, le soufre, les huiles et les stabilisants chimiques restent dans les granulats caoutchouteux de base.

Cette propriété est très importante vis-à-vis de la pollution et des normes y afférentes.

En outre, l'enrobage des granulats permet une cohésion générale du matériau final. Dans le cas de formation de plaques dont l'épaisseur peut être par exemple de l'ordre de dix fois la taille D du plus gros granulat, l'enrobage joue alors un rôle de rigidification de la plaque.

Dans tous les cas de formation de plaques, les matériaux et/ou leurs caractéristiques physiques seront choisis de telle sorte que les plaques soient auto-portantes, c'est-à-dire qu'elles se tiennent par elles-mêmes, sous leur propre poids.

Il a par ailleurs été constaté que le matériau aggloméré selon l'invention est peu sensible au gel, aux rayonnements ultraviolets et au vieillissement.

Un autre aspect de l'invention concerne le procédé d'obtention du matériau qui vient d'être décrit.

Les principales étapes du procédé conforme à l'invention sont les suivantes :
- dosage et introduction des granulats dans des moyens de malaxage ;
- dosage et introduction d'une solution aqueuse dans des moyens de malaxage ;
- malaxage des granulats ;
- dosage et introduction d'un liant hydraulique dans les moyens de malaxage ;
- malaxage du mélange jusqu'à obtention d'un mélange homogène ;
- ajout d'un complément d'eau et malaxage jusqu'à l'obtention d'un enrobage uniforme des granulats dans le mélange ;
- moulage et/ou coulée et/ou compression puis séchage du mélange.

Le mouillage de la surface des granulats peut être réalisé avec une solution aqueuse additionnée ou non d'agents tensioactifs. Cette étape constitue une préparation de la surface extérieure des granulats, qui améliore l'accrochage ultérieur du liant sur ladite surface.

Le dosage des granulats est réalisé soit en fonction du volume final de matériau à fabriquer, soit en fonction de la capacité totale des moyens de malaxage.

Le mouillage des granulats est tel que l'on apporte 5 % de volume liquide par rapport au volume total des granulats présents dans le moyen de malaxage.

Le malaxage des granulats est réalisé pendant 15 à 30 s.

L'objectif de cette étape est d'obtenir un mouillage complet de la surface des granulats par le liquide aqueux.

Le dosage du liant hydraulique est tel que l'on aboutit à un ratio eau/liant compris entre 0,3 et 0,6.

Des adjuvants peuvent être ajoutés avant ou au plus tard pendant l'introduction du liant hydraulique afin d'améliorer certaines propriétés du matériau.

On distingue les adjuvants dits de formulation qui influent principalement sur les propriétés à court terme du matériau ; se sont par exemple des plastifiants, des entraîneurs d'air, des durcisseurs ou des retardateurs de prise du mélange.

Peuvent également être ajoutés au mélange des adjuvants dits de composition qui agissent plutôt sur les propriétés à long terme du matériau. Ce sont des produits comme la fumée de silice (qui améliore la résistance en traction), les produits ignifugeants pour améliorer la résistance au feu, les liants hydrocarbonés, ou encore des fibres métalliques ou de synthèse destinées à améliorer la résistance à la flexion.

Les liants hydrocarbonés peuvent faire partie du liant hydraulique lui-même ou bien être ajoutés dans le mélange.

Les adjuvants agissent essentiellement à l'interface granulat/liant afin d'améliorer les liaisons à ce niveau.

Ils permettent finalement d'optimiser l'un ou plusieurs des paramètres suivants :
- le comportement rhéologique du mélange
- les résistances mécaniques
- la cinétique de durcissement
- le taux de cavités.

En fonction de l'application finale souhaitée, le mélange peut être moulé, vibré ou coulé. Ce type de mise en oeuvre est le même que celui qui est pratiqué couramment pour le béton.

La densité est comprise entre 0,5 et 1,5.

Le matériau final présente un module d'élasticité compris entre 50 et 1 000 MPa.

La résistance en compression à 7 jours varie entre 0,2 et 2 MPa, tandis que la résistance en compression à 27 jours est comprise entre 0,3 et 3 Mpa.

A titre comparatif, le béton présente des résistances en compression cent fois plus élevées.

Par ailleurs, il est possible de modifier les caractéristiques mécaniques du matériau final en lui appliquant une charge de compression avant la prise (de même que l'on ajoute des armatures métalliques précontraintes dans un béton).

Ceci permet d'améliorer sa tenue aux efforts cycliques.

Il peut également être prévu sans sortir du cadre de l'invention, de combiner une plaque ou une dalle de matériau selon l'invention avec une dalle de béton par exemple afin de former un ensemble multicomposants.

Des couches antisismiques interposées entre des dalles rigides peuvent aussi être envisagées.

Les utilisations envisagées sont multiples :
Il est ainsi possible de réaliser des couches horizontales ou des tranchées verticales anti-vibrations, des écrans acoustiques des éléments préfabriqués destinés à absorber des chocs, des dalles d'isolation acoustique et thermique pour les bâtiments, des pistes cyclables, d'athlétisme, des revêtements pour gymnases, terrains de jeux pour enfants ....

## Revendications

1. Procédé de fabrication d'un matériau aggloméré comprenant des granulats de caoutchouc enrobés dans un liant hydraulique et délimitant entre eux des cavités, **caractérisé en ce qu'**il comprend les étapes suivantes :
- dosage et introduction des granulats dans des moyens de malaxage ;
- dosage et introduction d'une solution aqueuse dans les moyens de malaxage ;
- malaxage des granulats ;
- dosage et introduction d'un liant hydraulique dans les moyens de malaxage ;
- malaxage du mélange jusqu'à obtention d'un mélange homogène ;
- ajout d'un complément d'eau et malaxage jusqu'à l'obtention d'un enrobage uniforme des granulats dans le mélange ;
- moulage et/ou coulée et/ou compression, puis séchage du mélange.

2. Procédé de fabrication selon la revendication 1, **caractérisé en ce que** le dosage de liant est tel que le ratio eau/liant est compris entre 0,3 et 0,6.

3. Procédé de fabrication selon l'une des revendications 1 ou 2, **caractérisé en ce qu'**il comprend en outre une étape d'introduction d'au moins un adjuvant dans le mélange homogène, avant l'étape d'ajout du complément d'eau, l'adjuvant pouvant comprendre des solutions de silicates de sodium ou de potassium, des ignifugeants, des liants hydrocarbonés, des fibres métalliques et/ou de synthèse.

4. Procédé de fabrication selon la revendication 3, **caractérisé en ce que** l'adjuvant comprend des plastifiants, des durcisseurs ou des retardateurs de prise du matériau, des entraîneurs d'air.

5. Procédé de fabrication selon la revendication 3, **caractérisé en ce que** le pourcentage de liants hydrocarbonés ou de charge minérale est compris entre 1 et 10% du poids total du mélange.

6. Procédé de fabrication selon l'une des revendications 1 ou 2, **caractérisé en ce que** les granulats (1) comportent en volume majoritairement du caoutchouc.

7. Procédé de fabrication selon la revendication 6, **caractérisé en ce que** les granulats (1) comprennent plus de 95% de caoutchouc.

8. Procédé de fabrication selon l'une quelconque des revendications 1 à 7, **caractérisé en ce que** la taille des granulats (1) est comprise entre 0,1 mm et 50 mm, préférentiellement inférieur à 25mm.

9. Procédé de fabrication selon l'une quelconque des revendications 1 à 8, **caractérisé en ce que** le pourcentage pondéral de liant hydraulique est compris entre 12 % et 60 %, préférentiellement entre 20 % et 60 %, préférentiellement entre 23 % et 30 % du poids total du mélange.

10. Procédé de fabrication selon l'une quelconque des revendications 1 à 9, **caractérisé en ce que** le pourcentage pondéral de granulats en caoutchouc est compris entre 35 % et 80 %, préférentiellement entre 40 % et 80 %, préférentiellement entre 50 et 70 % du poids total du mélange.

11. Procédé de fabrication selon la revendication 6, **caractérisé en ce que** les granulats comprennent 30% de métal et/ou 3% de textile.

12. Procédé de fabrication selon l'une quelconque des revendications 1 à 11, **caractérisé en ce que** la taille D du plus gros granulat est au plus égale à huit fois la taille d du plus petit granulat.

13. Matériau fabriqué par le procédé selon l'une quelconque des revendications 1 à 12, **caractérisé en ce que** le volume cumulé des cavités (3) communicantes est supérieur à 15% du volume total du matériau, et **en ce que** ledit volume est proche de volume total des cavités comprises dans le matériau.

14. Matériau selon la revendication 13, **caractérisé en ce que** sa densité apparente est comprise entre 0,5 et 1,2.

15. Utilisation du matériau selon l'une des revendications 13 ou 14 pour la fabrication de plaques dont l'épaisseur est supérieure ou égale à 10 fois la taille du plus gros granulat qu'elle contient.

16. Utilisation du matériau selon l'une des revendications 13 ou 14 pour la réalisation d'ouvrages pourvus d'armature.

## Patentansprüche

1. Verfahren zur Herstellung eines agglomerierten Materials, umfassend Kautschukgranulate, die mit einem hydraulischen Bindemittel umhüllt sind und zwischen sich Hohlräume begrenzen, **dadurch gekennzeichnet, dass** es die folgenden Schritte umfasst:
- Dosieren und Einführen der Granulate in Mittel zum Mischen;
- Dosieren und Einführen einer wässrigen Lösung in die Mittel zum Mischen;
- Mischen der Granulate;
- Dosieren und Einführen eines hydraulischen Bindemittels in die Mittel zum Mischen;
- Mischen des Gemischs, bis ein homogenes Gemisch erhalten wird;
- Zugeben eines Restanteils an Wasser und Mischen, bis eine gleichmäßige Umhüllung der Granulate in dem Gemisch erhalten wird;
- Formen und/oder Gießen und/oder Pressen, dann Trocknen des Gemischs.

2. Herstellungsverfahren nach Anspruch 1, **dadurch gekennzeichnet, dass** das Bindemittel so dosiert ist, dass das Wasser/Bindemittel-Verhältnis im Bereich zwischen 0,3 und 0,6 liegt.

3. Herstellungsverfahren nach einem der Ansprüche 1 oder 2, **dadurch gekennzeichnet, dass** es vor dem Schritt des Zugebens des Restanteils an Wasser ferner einen Schritt zum Einführen mindestens eines Zuschlagstoffs in das homogene Gemisch umfasst, wobei der Zuschlagstoffs Natrium- oder Kaliumsilicatlösungen, Feuerschutzmittel, kohlenwasserstoffhaltige Bindemittel, metallische und/oder synthetische Fasern umfassen kann.

4. Herstellungsverfahren nach Anspruch 3, **dadurch gekennzeichnet, dass** der Zuschlagstoffs Weichmacher, Härter oder Abbindeverzögerer des Materials, Luftporenbildner umfasst.

5. Herstellungsverfahren nach Anspruch 3, **dadurch gekennzeichnet, dass** der Prozentanteil an kohlenwasserstoffhaltigen Bindemitteln oder an mineralischem Füllstoff im Bereich zwischen 1 und 10 % des Gesamtgewichts des Gemischs liegt.

6. Herstellungsverfahren nach einem der Ansprüche 1 oder 2, **dadurch gekennzeichnet, dass** die Granulate (1) nach Volumen überwiegend Kautschuk umfassen.

7. Herstellungsverfahren nach Anspruch 6, **dadurch gekennzeichnet, dass** die Granulate (1) mehr als 95 % Kautschuk umfassen.

8. Herstellungsverfahren nach einem der Ansprüche 1 bis 7, **dadurch gekennzeichnet, dass** die Größe der Granulate (1) im Bereich zwischen 0,1 mm und 50 mm liegt, vorzugsweise kleiner als 25 mm ist.

9. Herstellungsverfahren nach einem der Ansprüche 1 bis 8, **dadurch gekennzeichnet, dass** der Gewichtsprozentanteil an hydraulischem Bindemittel im Bereich 12 % und 60 %, vorzugsweise zwischen 20 % und 60 %, vorzugsweise zwischen 23 % und 30 % des Gesamtgewichts des Gemischs liegt.

10. Herstellungsverfahren nach einem der Ansprüche 1 bis 9, **dadurch gekennzeichnet, dass** der Gewichtsprozentanteil an Kautschukgranulaten im Bereich zwischen 35 % und 80 %, vorzugsweise zwischen 40 % und 80 %, vorzugsweise zwischen 50 % und 70 % des Gesamtgewichts des Gemischs liegt.

11. Herstellungsverfahren nach Anspruch 6, **dadurch gekennzeichnet, dass** die Granulate etwa 30 % Metall und/oder 3 % Gewebe umfassen.

12. Herstellungsverfahren nach einem der Ansprüche 1 bis 11, **dadurch gekennzeichnet, dass** die Größe D des größten Granulats höchstens dem Achtfachen der Größe d des kleinsten Granulats entspricht.

13. Material, hergestellt durch das Verfahren nach einem der Ansprüche 1 bis 12, **dadurch gekennzeichnet, dass** das kumulierte Volumen der kommunizierenden Hohlräume (3) größer als 15 % des Gesamtvolumens des Materials ist, und dadurch, dass das Volumen nahe am Gesamtvolumen der Hohlräume liegt, die in dem Material enthalten sind.

14. Material nach Anspruch 13, **dadurch gekennzeichnet, dass** seine scheinbare Dichte im Bereich zwischen 0,5 und 1,2 liegt.

15. Verwendung des Materials nach einem der Ansprüche 13 oder 14 zur Herstellung von Platten, deren Dicke größer oder gleich des Zehnfachen der Größe des größten Granulats ist, das sie enthalten.

16. Verwendung des Materials nach einem der Ansprüche 13 oder 14 zur Ausführung von Bauwerken, die mit Bewehrung versehen sind.

## Claims

1. A method of fabricating an agglomerated material comprising rubber granules coated in a hydraulic binder and defining cavities between one another, the method being **characterized in that** it comprises the following steps:
• measuring out granules and inserting them in mixer means;
• measuring out an aqueous solution and inserting it in the mixer means;
• mixing the granules;
• measuring out a hydraulic binder and inserting it in the mixer means;
• mixing the mixture until a homogeneous mixture is obtained;
• adding additional water and mixing until the granules in the mixture are coated uniformly; and
• molding and/or casting and/or compressing the mixture and then drying it.

2. A fabrication method according to claim 1, **characterized in that** the quantity of binder is such that the water/binder ratio lies in the range 0.3 to 0.6.

3. A fabrication method according to claim 1 or claim 2, **characterized in that** it further comprises a step of introducing at least one additive into the homogeneous mixture before the step of adding additional water, the additive possibly comprising solutions of sodium or potassium silicates, fire retardants, hydrocarbon binders, metal and/or synthetic fibers.

4. A fabrication method according to claim 3, **characterized in that** the additive comprises plasticizers, hardeners or retarders for the setting of the material, air-entraining agents.

5. A fabrication method according to claim 3, **characterized in that** the percentage of hydrocarbon binders or of mineral filler lies in the range 1% to 10% of the total weight of the mixture.

6. A fabrication method according to claim 1 or claim 2, **characterized in that** a majority of the volume of the granules (1) is rubber.

7. A fabrication method according to claim 6, **characterized in that** the granules (1) comprise more than 95% rubber.

8. A fabrication method according to any one of claims 1 to 7, **characterized in that** the size of the granules (1) lies in the range 0.1 mm to 50 mm, and is preferably less than 25 mm.

9. A fabrication method according to any one of claims 1 to 8, **characterized in that** the percentage by weight of hydraulic binder lies in the range 12% to 60%, preferably in the range 20% to 60%, more preferably in the range 23% to 30% of the total weight of the mixture.

10. A fabrication method according to any one of claims 1 to 9, **characterized in that** the percentage by weight of rubber granules lies in the range 35% to 80%, preferably in the range 40% to 80%, more preferably in the range 50% to 70% of the total weight of the mixture.

11. A fabrication method according to claim 6, **characterized in that** the granules comprise 30% metal and/or 3% textile.

12. A fabrication method according to any one of claims 1 to 11, **characterized in that** the size D of the largest granules is no greater than eight times the size d of the smallest granules.

13. A material fabricated by the method according to any one of claims 1 to 12, **characterized in that** the combined volume of communicating cavities (3) is greater than 15% of the total volume of the material, and **in that** said volume is close to the total volume of cavities included in the material.

14. Material according to claim 13, **characterized in that** its apparent specific gravity lies in the range 0.5 to 1.2.

15. The use of the material according to claim 13 or claim 14 for fabricating plates of thickness that is greater than or equal to ten times the size of the largest granules they contain.

16. The use of the material according to claim 13 or claim 14 for making works provided with reinforcement.
